(19) Europäisches Patentamt
European Patent Office
Office européen des brevets

(11) Publication number: **0 000 398**
**A1**

(12) **EUROPEAN PATENT APPLICATION**

(21) Application number: **78100386.8**

(22) Date of filing: **12.07.78**

(51) Int. Cl.²: **C01F7/04,** C01G23/00, C01G31/00, D21C11/00

(30) Priority: **18.07.77 US 816814**

(43) Date of publication of application: **24.01.79 Bulletin 79/2**

(84) Designated Contracting States: **CH DE FR GB SE**

(71) Applicant: **KAJAANI Oy, 87100 Kajaani 10 (FI)**

(72) Inventor: **Makkonen, Hannu, Korpikuja 30, 87200 Kajaani 20 (FI)**
**Kuusniemi, Pekka Juhani, Korpikuja 33, 87200 Kajaani 20 (FI)**

(74) Representative: **Wenzel, Heinz-Peter et al, Postfach 73 04 66, D-2000 Hamburg 73 (DE)**

(54) **Method of manufacturing sodium-metal oxide.**

(57) Process for manufacturing sodium-metal oxide by burning a mixture comprising as a first constituent compounds containing sodium (1) and, as a second constituent, compounds containing the metals aluminium, titanium or vanadium (2). The burning is accomplished by spraying the mutually mixed compounds in the aqueous phase and in dropshape into a burning chamber (6) where the combustion takes place at a temperature between 970 and 1870° K (700 and 1600° C).

Advantageously, the compounds containing sodium are combustible sodium lignosulfonates or other sodium derivatives of lignin contained in the spent digestion liquors from the production of cellulose. Preferably, an aluminium compound is used, which is subsequently converted into sodium aluminate.

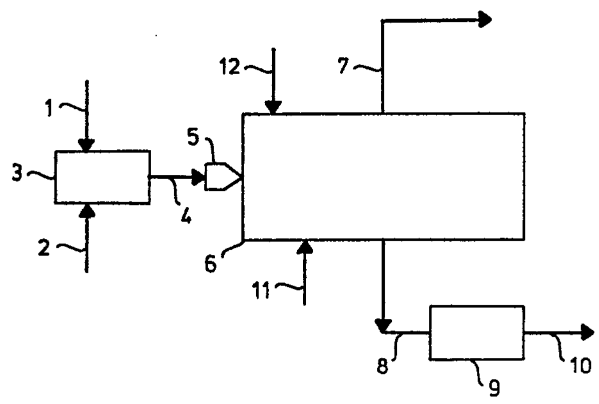


EP 0 000 398 A1

Disclosure of the invention

The present invention concerns a method of manufacturing sodium metal oxide by burning from compounds containing sodium and the respective metal, said metal being aluminium, titanium, or vanadium. The process is intended preferably for use in producing sodium aluminium oxide, or sodium aluminate, in connection with the recovery and regeneration of the digesting and/or bleaching chemicals for cellulose on a sodium basis. The process is furthermore intended for use in the manufacture of pure oxides and other compounds of said metals.

Aluminium and aluminium compounds have a very strong tendency to operate as an autocausticizing agent by replacing the anoinic components of sodium salts as they react with sodium salts. Based on this, aluminium and aluminium compounds may be advantageously used when producing sodium sulfite for cellulose digestion, out of sodium compounds. A process, based on the powerful autocausticizing tendency of aluminium compounds, for the manufacturing of sodium sulfite for use in cellulose digestion, out of sodium compounds and aluminium compounds, is known through U.S. Patent No. 3,061,408 (J. LURIE). In this process, the liquor waste from the digestion of a substance containing lignocellulose is concentrated and burned in the presence of compounds containing silicon or aluminium in abundance; the sodium-containing reaction products are converted into sodium sulfite with the aid of sulphur dioxide, sulfurous acid or sodium bisulfite, said silicon and aluminium compounds containing $SiO_2$ or $Al_2O_3$ respectively as reactive components. In said publication it is particularly emphasized that a long retention time of the reacting substance is necessary for the reaction to be completed. Such long retention time is achieved by using a kraft or a glass furnace.

In U.S. Patent No. 3,787,283 (D.R. SHEELEY ET AL.) a procedure of the same type as that in the above-mentioned patent to LURIE has been used, except for the fact that in order to achieve a long retention time a rotating furnace is used, into which are supplied granules made up by aluminium ashes gained from burning and by waste liquor on a sodium basis. In this way about one-third of the ashes which are formed can be recovered as sodium aluminate.

In the making of sodium aluminate essential significance attaches to the phase forms of the compound and to their changes. When the temperature is about 390 to 720 $^{o}K$ (120 to 450 $^{o}C$) mainly water molecules are detached from the sodium aluminate solution. Up to 1370 $^{o}K$ (1100 $^{o}C$) sodium aluminate occurs as compound $NaAlO_2$. At temperatures between 1370 and 1470 $^{o}K$ (1100 and 1200 $^{o}C$) the decomposition of sodium aluminate starts. If free carbon is present, there is formed $x.Na_2O$ $y.Al_2O_3$, where x/y is 1/1 or 1/11, as well as sodium and carbon monoxide. At the same time the oxide beta-$Al_2O_3$ begins to form, which is decomposed at 1670 to 1770 $^{o}K$ (1400 to 1500 $^{o}C$) and the oxide alfa-$Al_2O_3$, or corundum, which is an extremely stable and difficultly soluble compound and one which is difficult to handle. When sodium aluminate is being made of sodium carbonate and aluminium oxide the formation of the compound $NaAl_2$ begins at 770 $^{o}K$ (500 $^{o}C$); the reaction mainly takes place at 920 to 1370 $^{o}K$ (650 to 1100 $^{o}C$).

Sodium aluminate, which is excellently suited for the production of sodium sulfite with the aid of sulphur dioxide in the manner outlined above, is produced in the water phase and in dry conditions at temperatures between 350 and 1470 $^{o}K$ (80 and 1200 $^{o}C$) independent of the state of the starting substances. In practice, too, sodium aluminate is being made by the wet and the dry methods.

In the wet sodium aluminate producing method, bauxite or trihydrate of aluminium oxide is solved in a hot sodium hydroxide solution having a temperature, for instance, of 490 to 520 °K (220 to 250 °C). The viscous solution thus obtained is dried in drum dryers at a temperature lower than 470 °K (200 °C) whereby white crystalline sodium aluminate is obtained, having a moisture content of about 20 %. The aluminate is dried at about 990 °K (720 °C) in order to complete the reaction. The moisture of the end product amounts to about 0.6 %.

In the dry method, the aluminium-containing substance is admixed to a sodium compound, such as carbonate for instance, and the mixture is heated in a rotating furnace at 1170 to 1370 °K (900 to 1100 °C) until the reaction has come to an end. Crystallisation of the sodium aluminate implies a comparatively high alkali content. When the temperature exceeds about 1370 °K (1100 °C) the oxides beta-$Al_2O_3$ and alfa-$Al_2O_3$ begin to form. Sodium aluminate is also obtained at temperatures lower than those mentioned, by reacting sodium hydroxide and natural aluminium oxide with each other.

Other processes for the production of $NaAlO_2$ have been described, for instance, in German Patents No. 93 and 1 650 of 1877, in German Patents No. 7256, 31 675, 80 063 and 112 173, and in U.S. Patents No. 877,376 and 2,734,796.

The main drawback of the above-described processes to LURIE and SHEELEY is the long retention time which the reaction of the sodium and aluminium compounds requires to allow the reaction to proceed to its end, whereby a large kraft furnace, glass furnace, or rotating furnace becomes necessary. The capacity - and the price - of the furnace will thus be high, and the operating expenses of the process are likewise high.

When producing sodium aluminate by the wet method, allowing sodium and aluminium solutions to react with each other, one has to handle large quantities of solutions. This naturally implies large size tanks and liquid handling equipment. Furthermore the aluminate obtained has to be dried at an elevated temperature. When producing sodium aluminate by the dry method it is likewise necessary to use big reactors. This is because the raw material mix (aluminium compound plus sodium compound) is handled in granular form, the compounds reacting with each other in granular form.

In the production of sodium aluminate additional difficulties are caused by the formation of an insoluble oxide, i. e. of corundum. To wit, at temperatures beyond 1370 $^{o}K$ (1100 $^{o}C$) the formation of corundum starts, particularly if no excess alkali is present.

It is an object of the present invention to eliminate the drawbacks mentioned. It is a further object of the invention to develop a new process for the production of sodium aluminate in which the formation reaction of the sodium aluminate proceeds in such a rapid manner that the retention time in the reactor is short. It is still an other object of the invention to develop a new method for the production of sodium aluminate in which no corundum is produced. It is yet a further object of the invention to develop a new process for the production of sodium aluminate in which it is possible to use inexpensive sodium compounds and inexpensive aluminium compounds as raw materials. It is still another object of the invention to develop a new process for producing sodium aluminate which is particularly appropriate for the making of sodium sulfite intended for use in sulfite cellulose digestion and in which waste liquors from sodium-based cellulose digestion and aluminium hydroxide are used as raw materials.

The characteristic features of the invention are outlined in the attached claims.

The invention will now be described in greater detail with reference to preferred embodiments and to the accompanying drawings, in which

Fig. 1 shows, by way of a block diagram, the production of sodium aluminate by the process according to the invention, and

Fig. 2 shows, by way of a block diagram, a cellulose digesting process employing the process of the invention, and the sodium aluminate produced thereby in the production of sodium sulfite.

Fig. 1 shows a burning process according to the invention, for making sodium-metal oxide from compounds containing sodium 1 and the respective metal 2, by burning, said metal being aluminium, titanium or vanadium. In the embodiment presented, the compounds 1 and 2 containing sodium and the particular respective metal, for instance a sodium salt and a metal hydroxide, are conducted into a mixer 3 and further, in the form of an aqueous suspension 4 mixed in the mixer, into a nozzle 5, by which the suspension is sprayed into a burning chamber 6 in the form of droplets and is burned at a temperature between 970 and 1870 $^{o}K$ (700 and 1600 $^{o}C$) to become sodium-metal oxide. From the burning chamber 6, the sodium-metal oxide 8, such as sodium aluminate or $NaAlO_2$ ash for instance, is separated by the aid of separating means 9 and removed for further treatment or conversion as indicated by numeral 10. The flue gases 7 from the burning chamber 6 are removed and carried to a unit for recovering heat and chemicals. In addition to the metal compound, combustion air 12 is also conducted into the burning chamber 6.

When the burning process is initiated, the temperature inside the burning chamber 6 (of Fig. 1), in which the burning of sodium-metal oxide as taught by the invention takes place may be adjusted to its desired quantity by means of an additional burner 11 using additional fuel and by which the burning chamber is heated to a burning temperature of 970 to 1870 $^{o}K$ (700 to 1600 $^{o}C$) preferably 1170 to 1570 $^{o}K$ (9oo to 1300 $^{o}C$). When substances with a high thermal value , such as for instance sodium lignosulfonates, alkali lignins obtained from cellulose digestion and aluminium hydroxide, are used as compounds containing sodium and the respective metal no additional heat is usually required in the burning chamber, i.e., the heat derived from the process will maintain the desired temperature.

When sodium aluminate is being produced by the procedure according to the invention, the principal part of the compound used is preferably an aluminium compound, for instance aluminium hydroxide, bauxite, pure aluminium, aluminium oxide, or another equivalent aluminium compound.

The sodium containing compound utilized may consist, for instance, of sodium compounds obtained from waste liquor of sodium-based cellulose digestion such as sodium lignosulfonates or alkali lignins, sodium sulfide, sodium hydroxide, sodium oxide, sodium bicarbonate, sodium sulfate, sodium sulfite, sodium bisulfite, or other equivalent sodium compounds.

When compounds containing sodium and aluminium are being burned, the sodium in said compounds and the respective metal are preferably in an essentially stoichiometric proportion when the burning takes place. In that case the material that is being burned, i. e. the blended compounds containing sodium and aluminium, in the aqueous phase and in dropshape, contains sodium and aluminium in a substantially stoichiometric proportion, the ratio Na:Al being 0.5 to 1.5 (preferably 0.9 to 1.1) advantageously about 1. The ratio of sodium and aluminium, which is expressed as a molar ratio, is important in view of expedient use of raw materials, from the viewpoint of the melting point of the burning product achieved and in order to prevent the formation of disadvantageous, difficultly soluble corundum. If the material that is to be burned contains an excess of sodium, i. e. if the proportion of sodium and aluminium is 1.5 or at least higher than about 1.1, sodium carbonate is produced lowering the melting point, about 1870 $^{o}K$ (1600 $^{o}C$), of the sodium aluminate, or evaporating as ions. If there is substantially less sodium than aluminium in the material that is being burned, i. e. if the proportion of sodium an aluminium is below 0.5, preferably less than 0.9 or 1, there is aluminium in excess, causing the formation of inert harmful corundum, or causing unnecessary circulation when the sodium aluminate is used for the purpose of preparing the sulfite digesting for cellulose as presented below.

In burning sodium and the compounds containing the respective metal, e. g. aluminium in an aqueous phase in suspension, the dry matter content of the suspension to be burned is usually between 45 and 75 % by weight. The concentration of the suspension, that is the amount of water, has no great significance in itself. It is important that the suspension be easily fluid in view of its handling. Furthermore the solution of the sodium is important. Maximizing the concentration of the suspension is advantageous with respect to energy economy, that is in the sense of minimizing the water quantity evaporated in the burning process. The compounds containing sodium and the respective metal may be mixed in a separate mixing container, the proportion of the quantities of sodium and the metals being adjustable as desired. It is further possible to mix the compounds containing sodium and the respective metal, in a mixer built in conjunction with the burning chamber, or also in the nozzle by the aid of which the drops to be burned are produced.

The process of the invention for making sodium-metal oxide is based on the burning of compounds containing sodium and the respective metal, in the shape of droplets in suspension and/or as a solution. When the compounds are burned in the form of spray or aerosol type droplets, the burning is rapid, i. e. instantaneous. The compounds to be burned being mixed together, the droplets contain sodium and the respective metal in correct proportion, whereby the use of sodium and of metal in excess is avoided; furthermore the sodium and the respective metal react in controlled and desired mixing proportion.

It has been found in studies that have been made, that when compounds containing sodium and the respective metal in question, such as aluminium, in droplets in an aqueous phase are being burned, no difficultly soluble oxides such as corundum will be formed. This is apparently due to the presence of sodium ions and of water. The respective metal is also partly dissociated in water, whereby the substances are highly reactive and no harmful byproducts can be formed.

Furthermore, in the burning of compounds containing sodium and the respective metal, in aqueous phase and as droplets, the proportion of sodium and of the respective metal is easily controlled because the mixing of the substances may be carried out in the water phase. If the

substances were burned and mixed in dry condition, then the achievement of a satisfactory and sufficient result of mixing would require accurate grinding, weighing, and mixing operations, the handling of the dry compounds still being cumbersome and necessitating additional handling steps, such as drying for instance.

The burning reactor, or burner, required due to the burning in droplet form, which is instantaneous, may be constructed to be comparatively small and simple in construction, for instance such as has been disclosed in U.S. Patent No. 2,985,506. Then the retention time in the reactor will be short, and the space requirements of the reactor are extremely small, for instance compared with the drum furnaces conventionally used in the manufacturing of sodium aluminate (see U.S. Patents No. 3,061,408 and 3,787,283).

Fig. 2 shows another embodiment of the invention, wherein the process has been utilized in a sulfite cellulose manufacturing process on an industrial scale. In the process, the waste liquor 1 containing sodium lignosulfonates is separated in a separator 34 from the pulp 320 obtained from the digester 32, and for burning it is conducted together with aluminium hydroxide 2 to a mixer-evaporator 3 and further to a burning reactor 6. The burning of the compounds 1,2 containing sodium and aluminium takes place in a similar manner as in the embodiment of Fig. 1, by spraying the compounds mixed with each other into the burning chamber, as an aqueous suspension with 45 to 75 % by weight dry matter content in dropletshape, the burning taking place at a temperature between 970 and 1870 $^{o}K$ (700 to 1600 $^{o}C$). The sodium aluminate ash produced in the burning process 8, is separated by means of an electrofilter 9 and conducted - as indicated by 10 - into a

tank 12 to be suspended in water and, further in suspended condition 130, to a storage tank 13. The flue gases 7 arising from the burning of the compounds 1 and 2 in the burning chamber 6, mainly consisting of carbon dioxide and sulphur dioxide, are carried to sulphur dioxide recovery venturis 21,22,23,24.

The sodium aluminate emerging from the process is used together with the sulphur dioxide that is obtained, to prepare the digesting liquor or solution. From the storage tank 13, the sodium aluminate suspension 140 is conducted through a separator 14 separating solids 2' and through a container 15 via pipe conduits 151 and 150 to the bottom of a countercurrent washing venturi 24. Simultaneously the flue gases 7 are washed with water in the washing venturi 21, and the washing water 250 is carried, together with the sulphur dioxide dissolved therein, from the bottom of the venturi to the bottom of venturi 24. The flue gases 222 not solved in water in venturi 21 are conducted to the next venture 22 for washing, further-indicated by 232 - to the next venture 23, and finally - indicated by 242 - to venturi 24 and then to a flue gas outlet 260. From the venturi 24, the aqueous solution and suspension 243, formed there by flue gases and by sodium aluminate is conducted to the preceding venturi 23, and further - as indicated by 233 - to the venturi 22 and finally - as indicated by 223 - to the mixing tank 16. The venturis 21 to 24 additionally have an internal circulation, and solution is continuously circulated from the bottom of the venturis through the upper part of the venturi.

During the washing of flue gases 7 in the venturis 21 to 24, the sodium aluminate and the sulphur dioxide react as follows:

$$NaAlO_2 + 2H_2O + SO_2 \rightarrow NaHSO_3 + Al(OH)_3$$

Thus, the reaction products containing sodium which are formed in the dissolving of sodium aluminate are converted into sodium bisulfite with the aid of sulphur dioxide.

From a mixing tank 16, the suspension containing sodium bisulfite and aluminium hydroxide that has been formed is conducted to an aluminium hydroxide separator 18, where the aluminium hydroxide 170 is separated and conducted to a mixing tank 17, and through a second separator 19 for sodium bisulfite 201 to the mixer-evaporator 3 for burning. The sodium bisulfite solution 200,201 obtained from the separators 18 and 19 is conducted to an acid concentration reactor 20, and the concentrated acid 310 to an acid tank 31 and further to a digesting acid preparing tank 33 and to a digester 32. There is a continuous circulation between the tanks 31 and 33, and the digesting chemicals are added in the tank 33. The digesting liquor for the digester 32 is taken from the circulation pipe system 330.

In addition to the digesting acid, the lignocellulose-containing raw materials, such as wood chips 340 are fed into the digester 32. Upon digestion, after defibration has taken place, fibrous matter 40 is separated from the pulp obtained, in the separator 34, and the waste liquor 1 containing sodium lignosulfonates is conducted to the mixer-evaporator 3 to be evaporated and further for burning.

Example 1

To waste or spent liquor containing sodium lignosulfonate,

obtained from the sulfite digestion of cellulose, there was added aluminium hydroxide, and the suspension thus obtained was burned, using an experimental set-up as shown in Fig. 1, in a horizontal cylindrical burning chamber. The temperature in the burning chamber was raised to a starting temperature above 1470 $^{o}K$ (1200 $^{o}C$) by burning hydrocarbons by an ancillary burner. The ashes thus formed consisted, of sodium aluminate as found out by way of an x-ray diffraction analysis; on dissolving the ashes in water, 80 % sodium aluminate were solved, calculated on the dry matter content of the burnt suspension. When burning said suspension air was conducted into the burning chamber; an analysis revealed the following composition of the flue gases: 2,7 % hydrogen, 0.9 % argon and oxygen, 77.2 % nitrogen, 2,4 % carbon monoxide, 16.1 % carbon dioxide, 0.3 % hydrogen sulfide, 0.02 % sulphur compounds of carbon, 0.05 % sulphur dioxide, and 0.2 % methane.

The experiment was repeated, using spent or waste liquor obtained from sulfate digestion of cellulose (alkalilignins) as sodium compound instead of waste liquor from sulfite digestion.

Example 2

Aluminium hydroxide was admixed to waste liquor derived from sodium bisulfite digestion of cellulose, and the suspension was burned by spraying it through a Urquhart nozzle into a burning chamber as shown in Fig. 1. The temperature in the burning chamber was regulated with the aid of an ancillary burner using hydrocarbons. The chamber consisted of a vertical cylinder, the supplying of the suspension and of additional fuel as well as of combustion air thereinto being performed through the inner end of the cylinder. The lower end of the burning

chamber opened into the fire chamber of a steam boiler, with a capacity of 24 t/h. The ashes which formed in the burning chamber were dissolved in water, and the solution was analysed. Table 1 shows the results:

Table 1

| Test No. | Burning conditions Nozzle dia, mm | Press. kPa | Na/Al | Temp. °K | Results of analysis In sol. Na, % | In sol. Al, % | Al diss. % |
|---|---|---|---|---|---|---|---|
| 1 | 2.2 | 137 | 0.6 | 1273 | 13.1 | 9.9 | 45 |
| 2 | 1.8 | 334 | 1.0 | 1473 | 13.4 | 11.4 | 85 |
| 3 | 1.8 | 334 | 3.0 | 1473 | 15.6 | 3.5 | 67 |
| 4 | 1.8 | 334 | 1.5 | 1273 | 27.2 | 21.8 | 84 |
| 5 | 1.8 | 334 | 1.5 | 1573 | 16.2 | 11.9 | 100 |

The examples of the embodiments are only meant to illustrate the invention, without restricting it in any way whatsoever.

Claims

1. Method of producing sodium-metal oxide by burning from compounds containing sodium and the respective metal, said metal being aluminium, titanium, or vanadium, c h a r a c t e r i z e d i n that compounds containing sodium and the respective metal are mixed together, sprayed into a burning chamber in the aqueous phase and in droplet shape, and burned at a temperature between 970 and 1870 $^{o}K$ (700 and 1600 $^{o}C$) to become sodium-metal oxide.

2. Method according to claim 1, c h a r a c t e r i z e d i n that the sodium compound and the metal compound used are burned at a temperature between 1170 and 1570 $^{o}K$ (900 and 1300 $^{o}C$), preferably between 1270 and 1520 $^{o}K$ (1000 and 1250 $^{o}C$).

3. Method according to claim 1 or 2, c h a r act e r i z e d i n that the sodium and the respective metal contained in the sodium and metal compounds are substantially in stoichiometric proportion in the drops or droplets to be burned.

4. Method according to any of claims 1 to 3, c h a r a c t e r i z e d i n that the main part of the metal compound used is an aluminium compound.

5. Method according to claim 4, c h a r a c t e r i z e d i n that the main part of the metal compound used is aluminium hydroxide.

6. Method according to any of claims 1 to 5, c h a r a c t e r i z e d i n that the main part of the

compound containing sodium is composed of lignosulfonates.

7. Method according to any of claims 1 to 5, c h a r a c t e r i z e d i n that the main part of the compound containing sodium is composed of alkali lignins.

8. Method according to any of claims 1 to 7, c h a r a c t e r i z e d i n that the material to be burned contains sodium and aluminium in a proportion Na:Al totalling 0.5 to 1.1, preferably 0.9 to 1.1, advantageously about 1.

9. Method according to any of claims 1 to 8, c h a r a c t e r i z e d i n that the compounds containing in their main parts sodium lignosulfonates and aluminium hydroxide are mixed with each other and sprayed into a burning chamber as an aqueous suspension in the form of droplets and are burned to become $NaAlO_2$ at a temperature between 1170 and 1570 $^{o}K$ (900 and 1300 $^{o}C$), the proportion of the quantities of sodium and aluminium in the droplets being between 0.9 and 1.1.

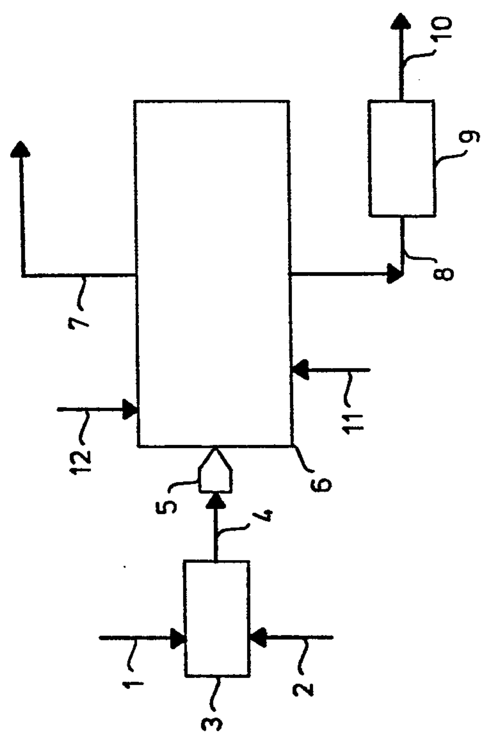


FIG. 1.

0000398



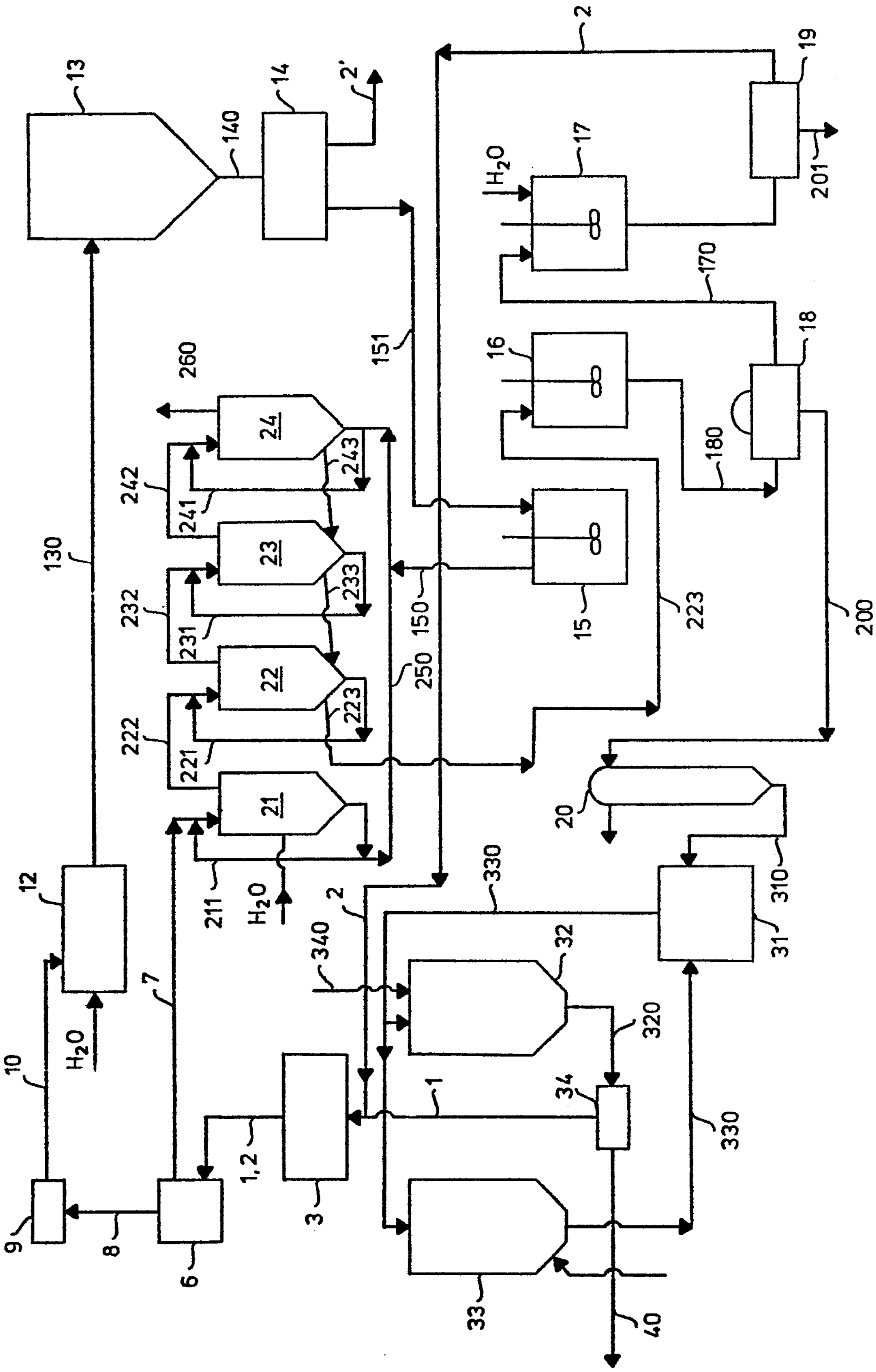


FIG. 2.

0000398

European Patent Office

# EUROPEAN SEARCH REPORT

Application number

EP 78 10 0386

| Category | Citation of document with indication, where appropriate, of relevant passages | Relevant to claim |
|---|---|---|
| X | FR - A - 2 024 178 (UNITED KINGDOM ATOMIC ENERGY AUTHORITY)<br>* Page 1, lines 1-25; page 2, line 28 to page 5, line 9 * | 1 |
| | US - A - 3 378 335 (J.D.ELLIS et al.)<br>* Column 1, line 55 to column 3, line 36; column 5, lines 13-25 * | 1 |
| | GB - A - 884 671 (MONTECATINI)<br>* Page 2, lines 21-64 * | 1,4 |
| D | US - A - 3 787 283 (D.R.SHEELEY et al.)<br>* Entire document * | 2,4-7 |
| A | CHEMICAL ABSTRACTS, vol. 81, nr. 22, December 2, 1974, Columbus, Ohio USA, M.F.LANDI "Solid sodium aluminate", page 118, abstract nr. 138196x<br>& IT - A - 878 104 | |
| A | US - A - 3 833 718 (M.G.REED et al.)<br>* Claims 1,2,6; figure 1 * | |

./.

CLASSIFICATION OF THE APPLICATION (Int. Cl.²)

C 01 F 7/04
C 01 G 23/00
C 01 G 31/00
D 21 C 11/00

TECHNICAL FIELDS SEARCHED (Int.Cl.²)

C 01 F 7/02
C 01 G 1/02
D 21 C 11/00
B 01 J 2/04
B 01 J 8/20

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-10-1978 | NESTBY |

EPO Form 1503.1 06.78

0000398

Application number

European Patent Office

# EUROPEAN SEARCH REPORT

EP 78 10 0386

-2-

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| A | US - A - 1 894 208 (C.VON GIRSE-WALD et al.)<br>* Claim 1; figures 1,2 *<br>---- | | |
| | | | TECHNICAL FIELDS SEARCHED (Int. Cl.²) |

EPO Form 1503.2 06.78